# EUROPÄISCHE PATENTSCHRIFT

(11) **EP 2 165 793 B1**
(45) Veröffentlichungstag und Bekanntmachung des Hinweises auf die Patenterteilung: **12.09.2012**
(21) Anmeldenummer: 08016416.3
(22) Anmeldetag: 18.09.2008
(51) Int. Cl.: B23G 1/32, B23G 3/00

(54) **Maschine zum Bearbeiten von plattenartigen Werkstücken, insbesondere von Blechen sowie Werkzeugsatz für eine derartige Maschine und Verwendung eines Gewindefräswerkzeugs an einer derartigen Maschine**
Machine for processing plate-shaped workpieces, in particular sheet metal, tool set for such a machine and use of a thread milling tool on such a machine
Machine de traitement de pièces à usiner de type plaques, en particulier de tôles, jeu d'outils pour une telle machine et utilisation d'une fraise de filetage dans une telle machine

(43) Veröffentlichungstag der Anmeldung: 24.03.2010
(73) Patentinhaber: TRUMPF Werkzeugmaschinen GmbH + Co. KG, 71254 Ditzingen (DE)
(72) Erfinder: Schmidt, Christoph, 71735 Eberdigen/Hochdorf (DE)
(74) Vertreter: Kohler Schmid Möbus

(56) Entgegenhaltungen:
- EP-A- 0 237 035
- EP-A- 0 394 925
- DE-A1- 2 207 045
- DE-A1- 3 843 307
- JP-A- 11 290 967
- US-A- 5 259 100

## Beschreibung

Die Erfindung betrifft eine Maschine zum Bearbeiten von plattenartigen Werkstücken, insbesondere von Blechen, mit einer Bearbeitungseinrichtung, an welcher ein Stanzwerkzeug zur Werkstückbearbeitung einwechselbar ist,
• wobei ein an der Bearbeitungseinrichtung eingewechseltes Stanzwerkzeug und das Werkstück mittels eines Stanz-Hubantriebes entlang einer quer zu der Werkstück-Hauptebene verlaufenden Hubachse relativ zueinander bewegbar und mittels eines Stanz-Drehantriebes um eine quer zu der Werkstück-Hauptebene verlaufende Drehachse relativ zueinander drehbar sind und
• wobei das an der Bearbeitungseinrichtung eingewechselte Stanzwerkzeug und das Werkstück mittels einer Stanz-Bewegungseinrichtung parallel zu der Werkstück-Hauptebene relativ zueinander bewegbar sind.

Die Erfindung betrifft des Weiteren einen Werkzeugsatz gemäβ dem Oberbegriff des Anspruchs 13 für eine Maschine der vorstehenden Art sowie die Verwendung eines Gewindefräswerkzeuges an einer Maschine der vorstehenden Art.

Gattungsgemäßer Stand der Technik ist offenbart in DE 2 207 045 A. Der Stand der Technik betrifft eine Stanz- oder Nibbelmaschine mit einer Werkzeugaufnahme, in die wahlweise ein Stanz- bzw. Nibbelwerkzeug oder ein Gewindebohrer eingewechselt werden können. Der in die Werkzeugaufnahme eingewechselte Gewindebohrer wird mittels eines Drehantriebes um seine Achse gedreht und gleichzeitig in Richtung seiner Achse in ein zuvor gefertigtes Loch an einer während des Gewindeschneidvorgangs ortsfesten Blechtafel eingeschraubt.

Weiterer Stand der Technik ist bekannt aus US 5,259,100 A. Diese Druckschrift offenbart eine Revolver-Stanzpresse mit einem Werkzeugrevolver, in welchen sowohl Stanzwerkzeuge als auch Werkzeuge für andersartige Bearbeitungen von Blechen eingesetzt werden können.

Die im Falle des gattungsgemäßen Standes der Technik bestehenden Bearbeitungsmöglichkeiten zu erweitern, ist Aufgabe der vorliegenden Erfindung.

Erfindungsgemäß gelöst wird diese Aufgabe durch die Maschine gemäß Patentanspruch 1, durch den Werkzeugsatz gemäß Patentanspruch 13 sowie durch die Verwendung eines Gewindefräswerkzeuges gemäß Patentanspruch 18.

Mittels der erfindungsgemäßen Maschine können an Werkstücken wahlweise stanzende Bearbeitungen vorgenommen oder Gewinde gefräst werden. Ist an der Bearbeitungseinrichtung der Maschine ein Gewindefräswerkzeug eingewechselt, so werden zum Einschneiden eines Gewindes in das Werkstück zwischen dem um seine Drehachse rotierenden Gewindefräswerkzeug und dem Werkstück eine Relativbewegung entlang der Werkzeug-Hubachse und gleichzeitig eine Relativbewegung parallel zu der Werkstück-Hauptebene erzeugt. Diese beiden Relativbewegungen werden derart aufeinander abgestimmt und derart gesteuert, dass an dem Werkstück das gewünschte Gewinde eingeschnitten wird. Erfindungsgemäß lassen sich Gewinde fertigen, deren Durchmesser größer sind als diejenigen Gewindedurchmesser, die sich mit Hilfe von Gewindebohrern erstellen lassen. Insbesondere besteht erfindungsgemäß die Möglichkeit, plattenartige Werkstücke, vorzugsweise Bleche, mit einer einzigen Werkstückeinspannung zunächst durch stanzende Bearbeitung mit einer Öffnung zu versehen und anschließend in die Wand dieser Öffnung durch Gewindefräsen ein Gewinde einzuschneiden. Es entfällt die Notwendigkeit, die stanzende Werkstückbearbeitung zur Vorbereitung des Gewindefräsens und das Gewindefräsen selbst auf unterschiedlichen Maschinen durchzuführen. Der Zeitbedarf für die Gewindefertigung wird dadurch minimiert. In Abhängigkeit von der sich stellenden Bearbeitungsaufgabe lassen sich an der Bearbeitungseinrichtung der Maschine nacheinander auch unterschiedliche Stanzwerkzeuge und/oder unterschiedliche Gewindefräswerkzeuge einwechseln. Damit Gewindefräswerkzeuge und Stanzwerkzeuge an ein und derselben Bearbeitungseinrichtung, insbesondere in ein und dieselbe Werkzeugaufnahme, eingewechselt werden können, sind ihre zur Werkzeugfixierung an der Bearbeitungseinrichtung bzw. in der Werkzeugaufnahme dienenden Lagereinrichtungen baugleich.

Besondere Ausführungsarten der Erfindung nach den Patentansprüchen 1 und 13 ergeben sich aus den abhängigen Patentansprüchen 2 bis 12 und 14 bis 17.

Das erfindungsgemäße Konzept ist an Werkstück-, insbesondere Blechbearbeitungsmaschinen, unterschiedlicher Bauart realisierbar. So können erfindungsgemäße Maschinen sowohl als Maschinen mit Werkzeugrevolver als auch als Maschinen mit Mono-Werkzeugaufnahme realisiert sein. In beiden Fällen lassen sich die im Falle der Erfindung vorgesehenen Bearbeitungsarten durchführen, indem in ein und dieselbe Werkzeugaufnahme ein Stanzwerkzeug oder anstelle des Stanzwerkzeugs ein Gewindefräswerkzeug eingewechselt wird (Patentanspruch 2). An Maschinen mit Werkzeugrevolver bietet sich ergänzend oder alternativ die Möglichkeit, unterschiedliche Magazinplätze des Werkzeugrevolvers mit Werkzeugen für verschiedene Bearbeitungsarten zu bestücken.

Im Interesse einer kompakten und kostengünstigen Bauweise der erfindungsgemäßen Maschine sind in bevorzugter Ausgestaltung der Erfindung die Merkmale der Patentansprüche 3 und 4 vorgesehen. Zur Erzeugung gleichartiger Relativbewegungen von Stanzwerkzeug und Gewindefräswerkzeug einerseits und Werkstück andererseits dient jeweils ein gemeinsamer Antrieb für das Stanzwerkzeug und das Gewindefräswerkzeug. Bei dem gemeinsamen Hubantrieb handelt es sich bevorzugtermaßen um den Hubantrieb der Werkzeugaufnahme; den gemeinsamen Drehantrieb bildet insbesondere der Drehantrieb der Werkzeugaufnahme. Ist in die Werkzeugaufnahme ein Stanzwerkzeug eingewechselt, so kann der gemeinsame Drehantrieb dazu dienen, das Stanzwerkzeug vor Aufnahme der stanzenden Werkstückbearbeitung um seine Drehachse gegenüber dem zu bearbeitenden Werkstück einzustellen. Bei Einsatz eines Gewindefräswerkzeuges lässt sich mittels des gemeinsamen Drehantriebes eine hochtourige Arbeits-Drehbewegung des Gewindefräswerkzeuges um seine Drehachse erzeugen. Als gemeinsame Bewegungseinrichtung wird an der erfindungsgemäßen Maschine eine Bewegungseinrichtung der Werkzeugaufnahme oder insbesondere eine Koordinatenführung für das Werkstück bevorzugt.

Als Drehantrieb für das Gewindefräswerkzeug, gegebenenfalls als gemeinsamer Drehantrieb für das Gewindefräswerkzeug und das Stanzwerkzeug, ist erfindungsgemäß ein getriebeloser Antrieb denkbar. Erfindungsgemäß bevorzugt wird aber eine Antriebsbauart mit einem Getriebe zwischen dem Antriebsmotor des Fräs- bzw. des gemeinsamen Drehantriebes einerseits und dem Gewindefräswerkzeug andererseits (Patentanspruch 5). Ein derartiges Getriebe, das beispielsweise als Planetengetriebe ausgeführt sein kann, bietet eine funktionssichere Möglichkeit, die für den Gewindefräsvorgang erforderliche Werkzeug-Drehzahl bereitzustellen.

Gemäß den Patentansprüchen 6 und 7 weist eine bevorzugte Erfindungsbauart zwei Bearbeitungseinrichtungen bzw. zwei Werkzeugaufnahmen auf, an denen bzw. in die wahlweise jeweils ein Stanzwerkzeug oder ein Gewindefräswerkzeug oder eine mit einem Gewindefräswerkzeug zusammenwirkende Werkstückauflage eingewechselt werden können. An der Werkstückauflage ist das betreffende Werkstück während des Gewindefräsens quer zu der Werkstück-Hauptebene abgestützt. Damit die alternativen Bearbeitungsmöglichkeiten bereitgestellt werden können, ist erfindungsgemäß der Werkzeugsatz nach Patentanspruch 14 vorgesehen, im Falle dessen sowohl das Gewindefräswerkzeug als auch die Werkstückauflage mit einer Lagereinrichtung versehen sind, die baugleich ist mit einer Lagereinrichtung des jeweiligen Stanzwerkzeuges und die es folglich ohne Weiteres erlaubt, das Gewindefräswerkzeug und die Werkstückauflage anstelle zweier Stanzwerkzeuge an den Bearbeitungseinrichtungen bzw. in den Werkzeugaufnahmen der erfindungsgemäßen Maschine zu fixieren.

Qualitativ besonders hochwertige Bearbeitungsergebnisse lassen sich dann erzielen, wenn - wie im Falle der Erfindungsbauart nach Patentanspruch 8 vorgesehen - eine Halteeinrichtung vorgesehen ist, welche das Werkstück während des Gewindefräsvorganges quer zu der Werkstück-Hauptebene fixiert und dadurch ein sogenanntes "Flattern" des Werkstückes unterbindet. Gleichzeitig lässt die Halteeinrichtung die für das Gewindefräsen unerlässliche Relativbewegung von Gewindefräswerkzeug und Werkstück parallel zu der Werkstück-Hauptebene zu.

In bevorzugter Ausgestaltung der Erfindung umfasst die erfindungsgemäße Halteeinrichtung Anlageelemente, die bei der Werkstückbearbeitung mittels des Gewindefräswerkzeuges an einander quer zu der Werkstück-Hauptebene gegenüberliegenden Seiten des Werkstückes anliegen (Patentansprüche 9, 15). Derartige Anlageelemente lassen sich in unmittelbarer Nähe der Bearbeitungsstelle anordnen und ermöglichen dadurch eine wirksame Fixierung des zu bearbeitenden Werkstückes quer zu seiner Hauptebene.

Grundsätzlich besteht im Falle der Erfindung die Möglichkeit, das oder die Anlageelemente der erfindungsgemäßen Halteeinrichtung mittels eines eigenen Antriebes an dem zu bearbeitenden Werkstück anzulegen bzw. von dem zu bearbeitenden Werkstück abzuheben. In bevorzugter Ausgestaltung der Erfindung ist aber vorgesehen, dass zur Bewegung des oder der Anlageelemente quer zu der Werkstück-Hauptebene der Fräs-Hubantrieb, gegebenenfalls der gemeinsame Hubantrieb von Stanzwerkzeug und Gewindefräswerkzeug, eingesetzt wird (Patentanspruch 10).

Im Falle der Erfindung ist es außerdem denkbar, dass das oder die Anlageelemente der Halteeinrichtung denselben Bewegungszustand aufweisen wie das Werkstück, an welchem das oder die Anlageelemente anliegen. In bevorzugter Ausgestaltung der Erfindung führen das oder die an dem Werkstück anliegenden Anlageelemente und das Werkstück aber eine Relativbewegung parallel zu der Werkstück-Hauptebene aus. Damit sich diese Relativbewegung reibungsarm und insbesondere ohne Kratzerbildung an der Werkstückoberfläche vollziehen kann, ist in Weiterbildung der Erfindung wenigstens ein Anlageelement mit einem Wälzkörper vorgesehen, über welchen das Werkstück von dem Anlageelement beaufschlagt wird und der sich bei der Relativbewegung des Gewindefräswerkzeuges und des Werkstückes auf dem Werkstück abwälzt (Patentansprüche 11, 16).

Anstelle von Wälzkörpern können Bürstenelemente vorgesehen sein, welche das Werkstück abstützen und gleichzeitig eine Relativbewegung von Anlageelement und Werkstück parallel zu der Werkstück-Hauptebene zulassen.

Im Falle der Erfindungsbauarten nach den Patentansprüchen 12 und 17 übernimmt die an der Bearbeitungseinrichtung bzw. in die Werkzeugaufnahme an der dem Gewindefräswerkzeug gegenüberliegenden Seite des Werkstückes eingewechselte Werkstückauflage gleichzeitig die Funktion eines Anlageelementes der erfindungsgemäßen Halteeinrichtung. Dieses Merkmal dient einer kompakten und kostengünstigen Bauweise der erfindungsgemäßen Maschine bzw. des erfindungsgemäßen Werkzeugsatzes.

Nachstehend wird die Erfindung anhand beispielhafter schematischer Darstellungen näher erläutert. Es zeigen:
- Fig. 1: eine Werkzeugmaschine für die Blechbearbeitung,
- Fig. 2: eine an einem Werkzeughalter eines Werkzeugmagazins angeordnete Gewindefräswerkzeug-Anordnung zur Verwendung an der Werkzeugmaschine gemäß Figur 1,
- Fig. 3: die Gewindefräswerkzeug-Anordnung gemäß Figur 2 in dem an der Werkzeugmaschine gemäß Figur 1 eingewechselten Zustand vor Beginn der Blechbearbeitung und

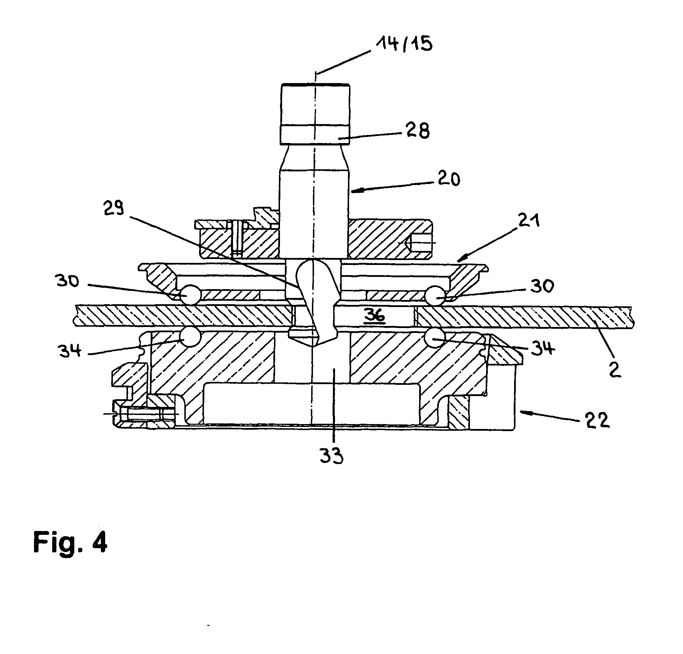

- Fig. 4: die Gewindefräswerkzeug-Anordnung gemäß Figur 3 bei der Blechbearbeitung.

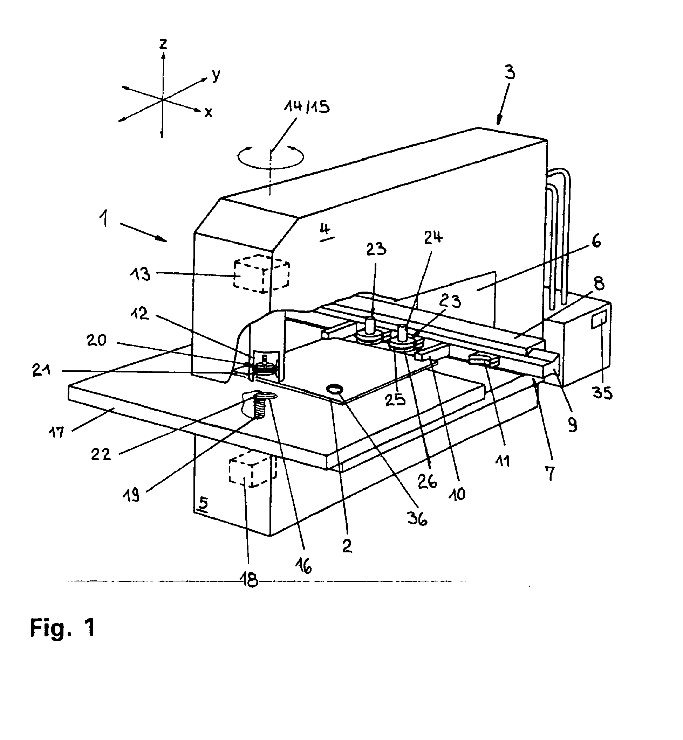

Gemäß Figur 1 weist eine als Werkzeugmaschine ausgeführte Maschine 1 zum Bearbeiten von Blechen 2 ein C-förmiges Maschinengestell 3 mit einem oberen Gestellschenkel 4 und einem unteren Gestellschenkel 5 auf. In einem Rachenraum 6 des Maschinengestells 3 ist eine herkömmliche Koordinatenführung 7 untergebracht. Die Koordinatenführung 7 umfasst wie üblich eine Querschienenführung 8 sowie eine an dieser geführte Querschiene 9. Die Querschienenführung 8 ist mittels eines nicht gezeigten Antriebsmotors gemeinschaftlich mit der Querschiene 9 in Richtung einer horizontalen y-Achse verfahrbar. Die Querschiene 9 kann mittels eines gleichfalls nicht gezeigten Antriebsmotors längs der Querschienenführung 8 in Richtung einer horizontalen und dabei senkrecht zu der y-Achse verlaufenden x-Achse bewegt werden.

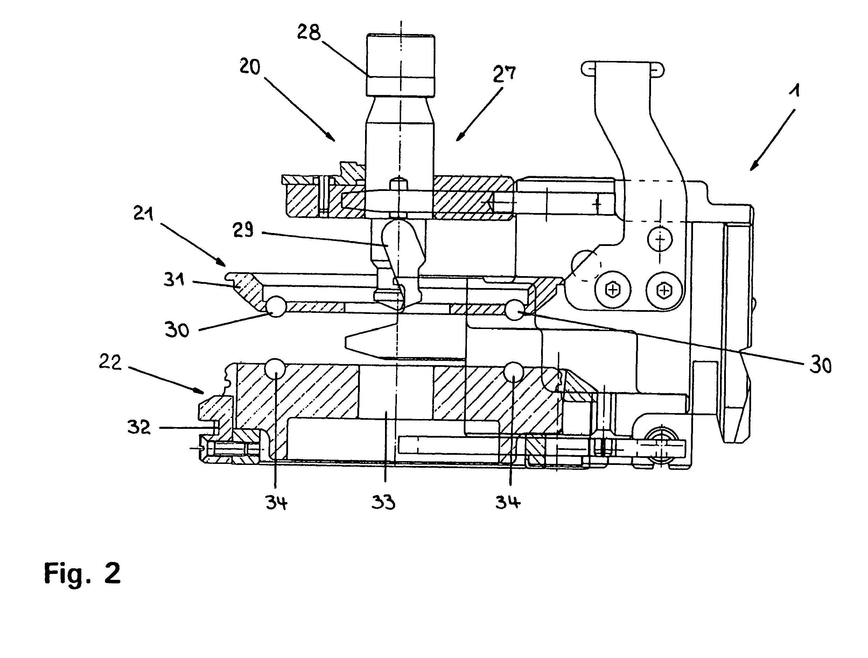

An der Querschiene 9 sind Spannpratzen 10 herkömmlicher Bauart zur Halterung des Bleches 2 vorgesehen. Außerdem dient die Querschiene 9 als Werkzeugmagazin. Zu diesem Zweck sind an der Querschiene 9 Werkzeughalter 11 lösbar angebracht. In Figur 1 sind die Werkzeughalter 11 angedeutet; Figur 2 zeigt einen Werkzeughalter 11 im Detail.

Der obere Gestellschenkel 4 des Maschinengestells 3 ist an seinem freien Ende mit einer ersten Werkzeugaufnahme 12 einer oberen Bearbeitungseinrichtung versehen. Die Werkzeugaufnahme 12 kann mittels eines in Figur 1 andeutungsweise gezeigten elektrischen Antriebes 13 entlang einer Hubachse 14 angehoben und abgesenkt werden. Die Hubachse 14 erstreckt sich in Richtung einer vertikalen z-Achse und damit quer zu einer Werkstück-Hauptebene, die ihrerseits parallel zu der horizontalen Oberfläche des Bleches 2 verläuft. Außerdem sind in die erste Werkzeugaufnahme 12 eingewechselte Werkzeuge mittels des elektrischen Antriebes 13 um eine mit der Hubachse 14 zusammenfallende Drehachse 15 in einander entgegengesetzte Richtungen drehbar.

Der ersten Werkzeugaufnahme 12 an dem oberen Gestellschenkel 4 liegt eine zweite Werkzeugaufnahme 16 einer weiteren Bearbeitungseinrichtung an dem unteren Gestellschenkel 5 des Maschinengestells 3 gegenüber. Die zweite Werkzeugaufnahme 16 ist in einen Werkstücktisch 17 integriert, der seinerseits auf dem unteren Gestellschenkel 5 montiert ist. Auch in die zweite Werkzeugaufnahme 16 eingewechselte Werkzeuge sind um die Drehachse 15 in einander entgegengesetzte Richtungen drehbar. Zu diesem Zweck vorgesehen ist ein in Figur 1 angedeuteter elektrischer Antrieb 18. Eine Beweglichkeit der zweiten Werkzeugaufnahme 16 entlang der Hubachse 14 ist in dem dargestellten Beispielsfall nicht vorgesehen aber grundsätzlich denkbar. Eine Absaugungseinrichtung 19 ist an die zweite Werkzeugaufnahme 16 angeschlossen.

In der Bearbeitungsphase gemäß Figur 1 ist in die erste Werkzeugaufnahme 12 an dem oberen Gestellschenkel 4 ein Gewindefräswerkzeug 20 gemeinsam mit einem oberen Anlageelement 21 eingewechselt. Die zweite Werkzeugaufnahme 16 an dem unteren Gestellschenkel 5 lagert eine Werkstückauflage 22, die gleichzeitig ein unteres Anlageelement ausbildet. An der Querschiene 9 der Koordinatenführung 7 werden zwei Stanzwerkzeug-Anordnungen 23 vorgehalten. In bekannter Weise umfassen die Stanzwerkzeug-Anordnungen 23 jeweils ein oberes Stanzwerkzeug 24 in Form eines Stanzstempels, einen Abstreifer 25 sowie ein als Stanzmatrize ausgeführtes unteres Stanzwerkzeug 26. Eine von Figur 1 abweichende Bestückung des Werkzeugmagazins an der Querschiene 9 der Koordinatenführung 7 ist denkbar. Insbesondere können unterschiedliche Gewindefräswerkzeuge vorgehalten werden.

Das Gewindefräswerkzeug 20, das obere Anlageelement 21 und die Werkstückauflage 22 sind Teile einer Gewindefräswerkzeug-Anordnung 27, wie sie Figur 2 im Detail zeigt. Alle Teile der Gewindefräswerkzeug-Anordnung 27 sind in Figur 2 an einem Werkzeughalter 11 lösbar angebracht. Mit Hilfe des Werkzeughalters 11 lässt sich die Gewindefräswerkzeug-Anordnung 27 beim Rüsten des an der Querschiene 9 der Koordinatenführung 7 vorgesehenen Werkzeugmagazins an der Querschiene 9 montieren (vgl. Figur 1).

Gemäß Figur 2 weist das Gewindefräswerkzeug 20 einen Werkzeugschaft 28 auf. Dieser ist baugleich mit einem Werkzeugschaft der in Figur 1 gezeigten oberen Stanzwerkzeuge 24. Sowohl der Werkzeugschaft 28 des Gewindefräswerkzeuges 20 als auch der Werkzeugschaft der oberen Stanzwerkzeuge 24 bildet eine Lagereinrichtung und dient als solche dazu, das Gewindefräswerkzeug 20 bzw. die oberen Stanzwerkzeuge 24 in der ersten Werkzeugaufnahme 12 der Maschine 1 zu fixieren.

In axialer Richtung des Gewindefräswerkzeuges 20 ist unterhalb des Werkzeugschaftes 28 ein Gewindefräser 29 vorgesehen. Der Gewindefräser 29 weist die Schneiden auf, mittels derer durch Umfangsfräsen Gewinde erstellt werden können.

Das obere Anlageelement 21 der Gewindefräswerkzeug-Anordnung 27 ist nach Art des Abstreifers 25 der Stanzwerkzeug-Anordnungen 23 ausgebildet. Abweichend von dem Abstreifer 25 der Stanzwerkzeug-Anordnungen 23 weist das obere Anlageelement 21 der Gewindefräswerkzeug-Anordnung 27 an einer dem zu bearbeitenden Werkstück zugeordneten Unterseite Wälzkörper in Form von allseitig drehbar gelagerten Kugeln 30 auf. Anstelle der Kugeln 30 wären beispielsweise auch Bürsten denkbar.

Ein Flansch 31 an dem oberen Anlageelement 21 der Gewindefräswerkzeug-Anordnung 27 ist baugleich mit einem entsprechenden Flansch an dem Abstreifer 25 der Stanzwerkzeug-Anordnungen 23. An dem Flansch 31 kann eine lösbare Verbindung zwischen dem oberen Anlageelement 21 der Gewindefräswerkzeug-Anordnung 27 und der ersten Werkzeugaufnahme 12 der Maschine 1 hergestellt werden. Entsprechend bildet der Flansch an dem Abstreifer 25 der Stanzwerkzeug-Anordnungen 23 eine Lagereinrichtung zur lösbaren Fixierung des Abstreifers 25 in der Werkzeugaufnahme 12.

Die Werkstückauflage 22 der Gewindefräswerkzeug-Anordnung 27 ist an dem Werkzeughalter 11 unterhalb des oberen Anlageelementes 21 gelagert. In ihrer konstruktiven Gestaltung entspricht die Werkstückauflage 22 der Gewindefräswerkzeug-Anordnung 27 weitgehend dem unteren Stanzwerkzeug 26 der Stanzwerkzeug-Anordnungen 23. Mit dem unteren Stanzwerkzeug 26 der Stanzwerkzeug-Anordnungen 23 stimmt die Werkstückauflage 22 der Gewindefräswerkzeug-Anordnung 27 insbesondere in einem Lagerflansch 32 baulich überein. Ebenso wie der entsprechende Lagerflansch an dem unteren Stanzwerkzeug 26 dient auch der Lagerflansch 32 an der Werkstückauflage 22 als Lagereinrichtung zur Fixierung des betreffenden Werkzeugs bzw. Werkzeugteils in der zweiten Werkzeugaufnahme 16 an dem unteren Gestellschenkel 5 der Maschine 1. Eine Durchtrittsöffnung 33 der Werkstückauflage 22 ist in ähnlicher Form, nämlich als Matrizenöffnung, an dem unteren Stanzwerkzeug 26 vorgesehen. Abweichend von unteren Stanzwerkzeugen üblicher Bauart weist die Werkstückauflage 22 der Gewindefräswerkzeug-Anordnung 27 an ihrer der Unterseite des zu bearbeitenden Werkstücks zugeordneten Oberseite als Kugeln 34 ausgebildete Wälzkörper 34 auf. Auch anstelle der Kugeln 34 können Bürsten vorgesehen sein.

Alle wesentlichen Funktionen der Maschine 1 sind numerisch gesteuert. Zu diesem Zweck weist die Maschine 1 eine in Figur 1 schematisch dargestellte numerische Steuerung 35 auf.

Vor Beginn einer Werkstückbearbeitung wird das Werkzeugmagazin an der Querschiene 9 der Koordinatenführung 7 mit den für die Bearbeitung benötigten Werkzeugen bestückt. In dem gezeigten Beispielsfall werden die Stanzwerkzeug-Anordnungen 23 sowie die Gewindefräswerkzeug-Anordnung 27 mittels der betreffenden Werkzeughalter 11 an der Querschiene 9 angebracht. Nach dem Rüsten der Maschine 1 wird diejenige WerkzeugAnordnung, die bei der Werkstückbearbeitung als erste benötigt wird, in die erste Werkzeugaufnahme 12 sowie in die zweite Werkzeugaufnahme 16 eingewechselt. Die Koordinatenführung 7 der Maschine 1 verfährt zu diesem Zweck in Richtung auf die freien Enden des oberen Gestellschenkels 4 sowie des unteren Gestellschenkels 5 des Maschinengestells 3 und übergibt in gewohnter Weise die betreffende Werkzeuganordnung an die erste Werkzeugaufnahme 12 und an die zweite Werkzeugaufnahme 16.

In dem gezeigten Beispielsfall wird das Blech 2 zunächst mittels einer der Stanzwerkzeug-Anordnungen 23 bearbeitet. Dementsprechend werden zunächst das obere Stanzwerkzeug 24 und der Abstreifer 25 der betreffenden Stanzwerkzeug-Anordnung 23 in die erste Werkzeugaufnahme 12 und das zugehörige untere Stanzwerkzeug 26 in die zweite Werkzeugaufnahme 16 eingewechselt. Danach wird unter entsprechendem Verfahren der Koordinatenführung 7 das zu bearbeitende Blech 2 mittels der an der Querschiene 9 der Koordinatenführung 7 vorgesehenen Spannpratzen 10 erfasst und durch anschließendes Verfahren der Koordinatenführung 7 gegenüber der eingewechselten Stanzwerkzeug-Anordnung 23 positioniert. Befindet sich das Blech 2 in seiner Solllage, so wird die eingewechselte Stanzwerkzeug-Anordnung 23 betätigt. Dabei wird das obere Stanzwerkzeug 24 mittels des elektrischen Antriebes 13 entlang der Hubachse 14 bewegt, bis es unter stanzender Bearbeitung des Bleches 2 in das untere Stanzwerkzeug 26 der Stanzwerkzeug-Anordnung 23 eintaucht. Der elektrische Antrieb 13 der Maschine 1 bildet dementsprechend einen Stanz-Hubantrieb. Er kann außerdem die Funktion eines Stanz-Drehantriebes übernehmen und als solcher das obere Stanzwerkzeug 24 der eingewechselten Stanzwerkzeug-Anordnung 23 um die Drehachse 15 positionieren. Entsprechend kann der elektrische Antrieb 18 an dem unteren Gestellschenkel 5 als Stanz-Hubantrieb und/oder als Stanz-Drehantrieb eingesetzt werden.

Die Koordinatenführung 7 erzeugt als Stanz-Bewegungseinrichtung die für die Werkstückbearbeitung erforderliche Relativbewegung von Blech 2 und eingewechselter Stanzwerkzeug-Anordnung 23 parallel zu der Werkstück-Hauptebene des Bleches 2. Als Relativbewegungen kommen Positionierbewegungen vor Beginn der stanzenden Werkstückbearbeitung aber auch Bewegungen zum Nachsetzen des Werkstückes zwischen den einzelnen Stanzhüben der eingewechselten Stanzwerkzeug-Anordnung 23 in Frage.

Durch die beschriebene stanzende Bearbeitung wird an dem Blech 2 eine kreisförmige Ausstanzung 36 erstellt (Figur 1). Die Wand der Ausstanzung 36 ist im weiteren Bearbeitungsablauf mit einem Gewinde zu versehen.

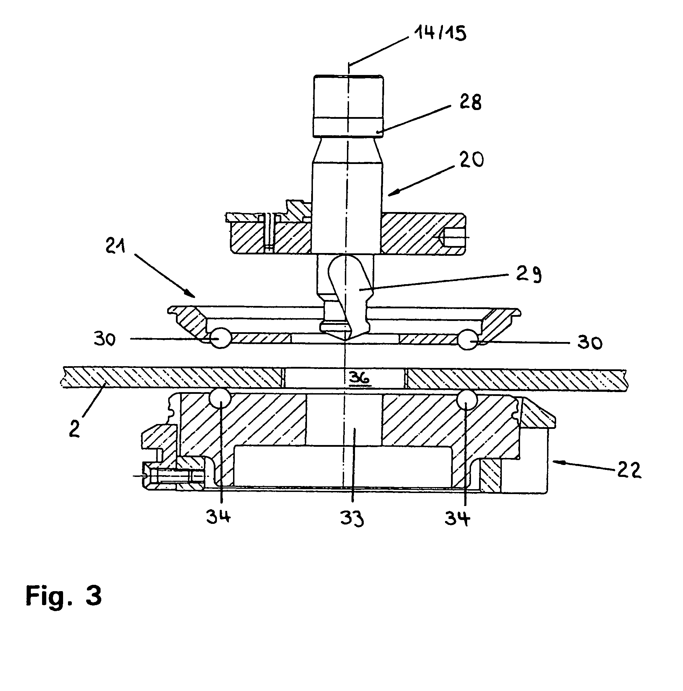

Zu diesem Zweck verfährt die Koordinatenführung 7 der Maschine 1 mit dem an der Querschiene 9 der Koordinatenführung 7 verbliebenen Werkzeughalter 11 der eingewechselten Stanzwerkzeug-Anordnung 23 zu der ersten Werkzeugaufnahme 12 sowie zu der zweiten Werkzeugaufnahme 16. Dort werden das obere Stanzwerkzeug 24, der Abstreifer 25 sowie das untere Stanzwerkzeug 26 von dem zugeordneten Werkzeughalter 11 übernommen. In die nun freien Werkzeugaufnahmen 12, 16 wird dann unter entsprechendem Verfahren der Koordinatenführung 7 die Gewindefräswerkzeug-Anordnung 27 eingewechselt. Anschließend wird das Blech 2 mit der Ausstanzung 36 gegenüber der eingewechselten Gewindefräswerkzeug-Anordnung 27 positioniert. An der Gewindefräswerkzeug-Anordnung 27 ergeben sich damit die in Figur 3 dargestellten Verhältnisse.

Grundsätzlich ist es auch denkbar, das untere Stanzwerkzeug 26 sowie die Werkstückauflage 22 in die obere Werkzeugaufnahme 12 und das obere Stanzwerkzeug 24 mit dem Abstreifer 25 sowie das Gewindefräswerkzeug 20 in die untere Werkzeugaufnahme 16 einzuwechseln.

Ausgehend von der Situation gemäß Figur 3 wird das in die erste Werkzeugaufnahme 12 eingewechselte Gewindefräswerkzeug 20 mittels des nun als Fräs-Drehantrieb sowie als Fräs-Hubantrieb fungierenden elektrischen Antriebes 13 mit einer hochtourigen Arbeits-Drehbewegung um die Drehachse 15 angetrieben und gleichzeitig entlang der Hubachse 14 zu dem Blech 2 hin abgesenkt. Gemeinschaftlich mit dem Gewindefräswerkzeug 20 bewegt der elektrische Antrieb 13 das obere Anlageelement 21 entlang der Hubachse 14 nach unten. Die Absenkbewegung des oberen Anlageelementes 21 endet, sobald es auf der Oberseite des Bleches 2 unter Vorspannung in vertikaler Richtung aufliegt. Gemeinsam mit der an der gegenüberliegenden Seite des Bleches 2 in der zweiten Werkzeugaufnahme 16 angeordneten Werkstückauflage 22 bildet das obere Anlageelement 21 eine Halteeinrichtung, mittels derer das Blech 2 quer zu der Werkstück-Hauptebene fixiert ist. Ungeachtet dieser Fixierung in vertikaler Richtung kann das Blech 2 mittels der Koordinatenführung 7 horizontal bewegt werden. Die Horizontalbewegung des Bleches 2 lässt sich aufgrund der Kugeln 30 an dem oberen Anlageelement 21 und der Kugeln 34 an der Werkstückauflage 22 der Gewindefräswerkzeug-Anordnung 27 als reibungsarme Bewegung und insbesondere ohne Kratzerbildung an den Sichtflächen des Bleches 2 realisieren.

Die Absenkbewegung des um die Drehachse 15 rotierenden Gewindefräswerkzeuges 20 wird nach dem Auflaufen des oberen Anlageelementes 21 auf die Oberseite des Bleches 2 fortgesetzt, bis das Gewindefräswerkzeug 20 mit dem Gewindefräser 29 in die Ausstanzung 36 an dem Blech 2 eintaucht. Durch entsprechende Verfahrbewegung der als Fräs-Bewegungseinrichtung dienenden Koordinatenführung 7 wird gleichzeitig das Blech 2 in horizontaler Richtung derart bewegt, dass der Gewindefräser 29 des Gewindefräswerkzeuges 20 in die Wand der Ausstanzung 36 an dem Blech 2 eingreift. Unter fortgesetzter Absenkbewegung des Gewindefräswerkzeuges 20 und gleichzeitiger, auf die Absenkbewegung des Gewindefräswerkzeuges 20 abgestimmter Horizontalbewegung des Bleches 2 schneidet das um die Drehachse 15 rotierende Gewindefräswerkzeug 20 mit dem Gewindefräser 29 das gewünschte Gewinde in die Wand der Ausstanzung 36 ein. Späne, die während des Gewindefräsvorganges anfallen, werden mittels der Absaugungseinrichtung 19 über die Durchtrittsöffnung 33 der Werkstückauflage 22 abgeführt.

Nach Fertigstellung des Gewindes wird das Blech 2 mittels der Koordinatenführung 7 derart positioniert, dass das Gewindefräswerkzeug 20 im Innern der nun mit einem Gewinde versehenen Ausstanzung 36 mit radialem Abstand von der Wand der Ausstanzung 36 zu liegen kommt. Anschließend wird das Gewindefräswerkzeug 20 entlang der Hubachse 14 in seine Ausgangslage nach oben bewegt. Dabei hebt das obere Anlageelement 21 von der Oberseite des Bleches 2 ab und es ergeben sich Verhältnisse, die den in Figur 3 dargestellten Verhältnissen entsprechen. Je nach Bearbeitungsaufgabe kann das Blech 2 nun aus der Maschine 1 entnommen oder weiter bearbeitet werden.

## Patentansprüche

1. Maschine zum Bearbeiten von plattenartigen Werkstücken, insbesondere von Blechen (2), mit einer Bearbeitungseinrichtung, an welcher ein Stanzwerkzeug (24, 26) zur Werkstückbearbeitung einwechselbar ist,
• wobei ein an der Bearbeitungseinrichtung eingewechseltes Stanzwerkzeug (24, 26) und das Werkstück mittels eines Stanz-Hubantriebes (13, 18) entlang einer quer zu der Werkstück-Hauptebene verlaufenden Hubachse (14) relativ zueinander bewegbar und mittels eines Stanz-Drehantriebes (13, 18) um eine quer zu der Werkstück-Hauptebene verlaufende Drehachse (15) relativ zueinander drehbar sind und
• wobei das an der Bearbeitungseinrichtung eingewechselte Stanzwerkzeug (24, 26) und das Werkstück mittels einer Stanz-Bewegungseinrichtung parallel zu der Werkstück-Hauptebene relativ zueinander bewegbar sind,
**dadurch gekennzeichnet,**
• **dass** an der Bearbeitungseinrichtung anstelle des Stanzwerkzeugs (24, 26) ein Gewindefräswerkzeug (20) einwechselbar ist,
• **dass** das an der Bearbeitungseinrichtung eingewechselte Gewindefräswerkzeug (20) und das Werkstück mittels eines Fräs-Hubantriebes (13, 18) entlang einer quer zu der Werkstück-Hauptebene verlaufenden Hubachse (14) relativ zueinander bewegbar und mittels eines Fräs-Drehantriebes (13, 18) um eine quer zu der Werkstück-Hauptebene verlaufende Drehachse (15) relativ zueinander drehbar sind,
• **dass** das an der Bearbeitungseinrichtung eingewechselte Gewindefräswerkzeug (20) und das Werkstück mittels einer Fräs-Bewegungseinrichtung parallel zu der Werkstück-Hauptebene relativ zueinander bewegbar sind und
• **dass** die Relativbewegung des Gewindefräswerkzeuges (20) und des Werkstücks entlang der Hubachse (14) und die Relativbewegung des Gewindefräswerkzeuges (20) und des Werkstücks parallel zu der Werkstück-Hauptebene derart aufeinander abgestimmt steuerbar sind, dass bei gleichzeitiger Relativ-Drehbewegung von Gewindefräswerkzeug (20) und Werkstück um die Drehachse (15) an dem Werkstück ein Gewinde fräsbar ist.

2. Maschine nach Anspruch 1, **dadurch gekennzeichnet, dass** die Bearbeitungseinrichtung eine Werkzeugaufnahme (12, 16) aufweist, welche bei der Werkstückbearbeitung dem Werkstück quer zu der Werkstück-Hauptebene gegenüberliegt und in welche ein Stanzwerkzeug (24, 26) oder anstelle des Stanzwerkzeugs (24, 26) ein Gewindefräswerkzeug (20) einwechselbar ist, wobei ein in die Werkzeugaufnahme (12, 16) eingewechseltes Gewindefräswerkzeug (20) und das Werkstück mittels des Fräs-Hubantriebes (13, 18) entlang der quer zu der Werkstück-Hauptebene verlaufenden Hubachse (14) relativ zueinander bewegbar und mittels des Fräs-Drehantriebes (13, 18) um die quer zu der Werkstück-Hauptebene verlaufende Drehachse (15) relativ zueinander drehbar sind und wobei das in die Werkzeugaufnahme (12, 16) eingewechselte Gewindefräswerkzeug (20) und das Werkstück mittels der Fräs-Bewegungseinrichtung parallel zu der Werkstück-Hauptebene relativ zueinander bewegbar sind.

3. Maschine nach einem der vorhergehenden Ansprüche, **dadurch gekennzeichnet, dass** als Stanz-Hubantrieb (13, 18) sowie als Fräs-Hubantrieb (13, 18) ein gemeinsamer Hubantrieb (13, 18) und/oder als Stanz-Drehantrieb (13, 18) sowie als Fräs-Drehantrieb (13, 18) ein gemeinsamer Drehantrieb (13, 18) und/oder als Stanz-Bewegungseinrichtung sowie als Fräs-Bewegungseinrichtung eine gemeinsame Bewegungseinrichtung vorgesehen ist bzw. sind.

4. Maschine nach einem der vorhergehenden Ansprüche, **dadurch gekennzeichnet, dass** als gemeinsamer Hubantrieb (13, 18) ein Hubantrieb (13, 18) der Werkzeugaufnahme (12, 16) und/oder als gemeinsamer Drehantrieb (13, 18) ein Drehantrieb (13, 18) der Werkzeugaufnahme (12, 16) und/oder als gemeinsame Bewegungseinrichtung eine Bewegungseinrichtung der Werkzeugaufnahme oder eine Koordinatenführung (7) für das Werkstück vorgesehen ist.

5. Maschine nach einem der vorhergehenden Ansprüche, **dadurch gekennzeichnet, dass** der Fräs-Drehantrieb (13, 18), gegebenenfalls der gemeinsame Drehantrieb (13, 18), ein Getriebe aufweist, welches zwischen einem Antriebsmotor des Fräs- bzw. des gemeinsamen Drehantriebs (13, 18) und dem Gewindefräswerkzeug (20) vorgesehen ist.

6. Maschine nach einem der vorhergehenden Ansprüche, **dadurch gekennzeichnet, dass** eine zweite Bearbeitungseinrichtung vorgesehen ist, welche der mit dem Gewindefräswerkzeug (20) ausrüstbaren Bearbeitungseinrichtung quer zu der Werkstück-Hauptebene gegenüberliegt und an welcher wahlweise ein zweites Stanzwerkzeug (24, 26) oder eine Werkstückauflage (22) einwechselbar ist, wobei das Werkstück an der Werkstückauflage (22) quer zu der Werkstück-Hauptebene abgestützt ist, während es mittels des an der gegenüberliegenden Bearbeitungseinrichtung eingewechselten Gewindefräswerkzeuges (20) bearbeitet wird.

7. Maschine nach einem der vorhergehenden Ansprüche, **dadurch gekennzeichnet, dass** die zweite Bearbeitungseinrichtung eine zweite Werkzeugaufnahme (12, 16) aufweist, welche der mit dem Gewindefräswerkzeug (20) ausrüstbaren Werkzeugaufnahme (12, 16) quer zu der Werkstück-Hauptebene gegenüberliegt und in welche wahlweise ein zweites Stanzwerkzeug (24, 26) oder eine Werkstückauflage (22) einwechselbar ist, wobei das Werkstück an der Werkstückauflage (22) quer zu der Werkstück-Hauptebene abgestützt ist, während es mittels des in die gegenüberliegende Werkzeugaufnahme (12, 16) eingewechselten Gewindefräswerkzeuges (20) bearbeitet wird.

8. Maschine nach einem der vorhergehenden Ansprüche, **dadurch gekennzeichnet, dass** eine Halteeinrichtung (21, 22) vorgesehen ist, welche das Werkstück, während es mittels des an der betreffenden Bearbeitungseinrichtung, gegebenenfalls in die betreffende Werkzeugaufnahme (12, 16), eingewechselten Gewindefräswerkzeuges (20) bearbeitet wird, quer zu der Werkstück-Hauptebene fixiert und welche gleichzeitig die Relativbewegung des Gewindefräswerkzeuges (20) und des Werkstückes parallel zu der Werkstück-Hauptebene zulässt.

9. Maschine nach einem der vorhergehenden Ansprüche, **dadurch gekennzeichnet, dass** die Halteeinrichtung (21, 22) Anlageelemente (21, 22) umfasst, die bei der Werkstückbearbeitung mittels des an der betreffenden Bearbeitungseinrichtung, gegebenenfalls in die betreffende Werkzeugaufnahme (12, 16), eingewechselten Gewindefräswerkzeuges (20) an einander quer zu der Werkstück-Hauptebene gegenüberliegenden Seiten des Werkstücks anliegen, wobei die beidseits des Werkstücks angeordneten Anlageelemente (21, 22) die Relativbewegung des Gewindefräswerkzeuges (20) und des Werkstückes parallel zu der Werkstück-Hauptebene zulassen.

10. Maschine nach einem der vorhergehenden Ansprüche, **dadurch gekennzeichnet, dass** wenigstens das oder die Anlageelemente (21, 22) an einer Seite des Werkstücks mittels des Fräs-Hubantriebes (13), gegebenenfalls mittels des gemeinsamen Hubantriebes (13), in eine Außerfunktionsstellung sowie in eine Funktionsstellung bewegbar ist bzw. sind.

11. Maschine nach einem der vorhergehenden Ansprüche, **dadurch gekennzeichnet, dass** wenigstens ein Anlageelement (21, 22) an dem Werkstück mit einem Wälzkörper (30, 34) anliegt, welcher sich bei der Relativbewegung des Gewindefräswerkzeuges (20) und des Werkstückes parallel zu der Werkstück-Hauptebene auf dem Werkstück abwälzt.

12. Maschine nach einem der vorhergehenden Ansprüche, **dadurch gekennzeichnet, dass** die an der zweiten Bearbeitungseinrichtung, gegebenenfalls in die zweite Werkzeugaufnahme (12, 16), eingewechselte Werkstückauflage (22) ein Anlageelement der Halteeinrichtung (21, 22) ausbildet.

13. Werkzeugsatz für eine Maschine (1) zum Bearbeiten von Werkstücken, insbesondere von Blechen (2), mit einem Stanzwerkzeug (24), welches eine Lagereinrichtung aufweist, mittels derer das Stanzwerkzeug (24) an einer Bearbeitungseinrichtung, gegebenenfalls in einer Werkzeugaufnahme (12, 16), der Maschine (1) fixierbar ist,
**dadurch gekennzeichnet, dass**
zusätzlich zu dem Stanzwerkzeug (24) ein Gewindefräswerkzeug (20) zum Umfangsfräsen von Gewinden vorgesehen ist, welches eine Lagereinrichtung (28) aufweist, die mit der Lagereinrichtung des Stanzwerkzeuges (24) baugleich ist und mittels derer das Gewindefräswerkzeug (20) anstelle des Standzwerkzeugs (24) an derselben Bearbeitungseinrichtung, gegebenenfalls in derselben Werkzeugaufnahme (12, 16), fixierbar ist wie das Stanzwerkzeug (24).

14. Werkzeugsatz nach Anspruch 13, **dadurch gekennzeichnet, dass** das Gewindefräswerkzeug (20) gemeinsam mit einer Werkstückauflage (22) eine Gewindefräswerkzeug-Anordnung bildet und dass ein zweites Stanzwerkzeug (26) vorgesehen ist, wobei die Werkstückauflage (22) der Gewindefräswerkzeug-Anordnung eine Lagereinrichtung (32) aufweist, mittels derer die Werkstückauflage (22) an einer zweiten Bearbeitungseinrichtung, gegebenenfalls in einer zweiten Werkzeugaufnahme (12, 16), der Maschine (1) zum Bearbeiten von Werkstücken, insbesondere von Blechen (2), fixierbar ist und die baugleich ist mit einer Lagereinrichtung des zweiten Stanzwerkzeuges (26), mittels derer das zweite Stanzwerkzeug (26) anstelle der Werkstückauflage (22) an der zweiten Bearbeitungseinrichtung, gegebenenfalls in der zweiten Werkzeugaufnahme (12, 16), der Maschine (1) zum Bearbeiten von Werkstücken, insbesondere von Blechen (2), fixierbar ist.

15. Werkzeugsatz nach Anspruch 14, **dadurch gekennzeichnet, dass** Anlageelemente (21, 22) vorgesehen sind, welche einander quer zu der Werkstück-Hauptebene gegenüberliegenden Seiten des Werkstücks zugeordnet sind, mittels derer das Werkstück während der Bearbeitung durch das Gewindefräswerkzeug (20) quer zu der Werkstück-Hauptebene fixiert ist und welche eine Relativbewegung des Gewindefräswerkzeuges (20) und des Werkstücks parallel zu der Werkstück-Hauptebene zulassen.

16. Werkzeugsatz nach Anspruch 15, **dadurch gekennzeichnet, dass** wenigstens ein Anlageelement (21, 22) an seiner dem Werkstück zugeordneten Seite einen Wälzkörper (30, 34) aufweist, mit welchem das Anlageelement (21, 22) an dem Werkstück anlegbar ist und welcher sich bei der Relativbewegung des Gewindefräswerkzeuges (20) und des Werkstücks parallel zu der Werkstück-Hauptebene auf dem Werkstück abwälzt.

17. Werkzeugsatz nach einem der Ansprüche 14 bis 16, **dadurch gekennzeichnet, dass** die Werkstückauflage (22) ein Anlageelemente ausbildet.

18. Verwendung eines Gewindefräswerkzeuges (20) zum Umfangsfräsen von Gewinden an einer Bearbeitungseinrichtung, gegebenenfalls in einer Werkzeugaufnahme (12, 16), einer Maschine (1) zum Bearbeiten von Werkstücken, insbesondere von Blechen (2), wobei das Gewindefräswerkzeug (20) mittels einer Lagereinrichtung (28), die baugleich ist mit einer Lagereinrichtung eines Stanzwerkzeuges (24), anstelle des Stanzwerkzeuges (24) an der Bearbeitungseinrichtung, gegebenenfalls in der Werkzeugaufnahme (12, 16), der Maschine (1) fixiert wird.

## Claims

1. A machine for processing plate-like workpieces, in particular metal sheets (2), comprising a processing device at which a stamping tool (24, 26) can be interchangeably mounted for workpiece processing,
• wherein a stamping tool (24, 26) interchanged at the processing device and the workpiece are movable relative to each other along a stroke axis (14) running transverse to the workpiece main plane by means of a stamping stroke drive (13, 18) and are rotatable relative to each other about a rotational axis (15) running transverse to the workpiece main plane by means of a stamping rotary drive (13, 18) and
• wherein the stamping tool (24, 26) interchanged at the processing machine and the workpiece are movable relative to each other parallel to the workpiece main plane by means of a stamping movement device
**characterised in that**
• a thread-milling tool (20) can be interchanged with the stamping tool (24, 26) at the processing device,
• the thread-milling tool (20) interchanged at the processing device and the workpiece are movable relative to each other along a stroke axis (14) running transverse to the workpiece main plane by means of a milling stroke drive (13, 18) and are rotatable relative to each other about a rotational axis (15) running transverse to the workpiece main plane by means of a milling rotary drive (13, 18),
• the thread-milling tool (20) interchanged at the processing machine and the workpiece are movable relative to each other parallel to the workpiece main plane by means of a milling movement device, and
• the relative movement of the thread-milling tool (20) and the workpiece along the stroke axis (14) and the relative movement of the thread-milling tool (20) and the workpiece parallel to the workpiece main plane are controllable coordinated with each other in such a manner that upon simultaneous relative rotation of thread-milling tool (20) and workpiece about the rotational axis (15) a thread can be milled on the workpiece.

2. A machine according to claim 1, **characterised in that** the processing device comprises a tool holder (12, 16), which lies opposite the workpiece transverse to the workpiece main plane during processing of the workpiece and in which a stamping tool (24, 26) or instead of the stamping tool (24, 26) a thread-milling tool (20) is interchangeable, wherein a thread-milling tool (20) interchanged into the tool holder (12, 16) and the workpiece are movable relative to each other along the stroke axis (14) running transverse to the workpiece main plane by means of the milling stroke drive (13, 18) and are rotatable relative to each other about the rotational axis (15) running transverse to the workpiece main plane by means of the milling rotary drive (13, 18), and wherein the thread-milling tool (20) interchanged into the tool holder (12, 16) and the workpiece are movable relative to each other parallel to the workpiece main plane by means of the milling movement device.

3. A machine according to any one of the preceding claims, **characterised in that** as stamping stroke drive (13, 18) and as milling stroke drive (13, 18) a common stroke drive (13, 18) and/or as stamping rotary drive (13, 18) and as milling rotary drive (13, 18) a common rotary drive (12, 18) and/or as stamping movement device and as milling movement device a common movement device is/are provided.

4. A machine according to any one of the preceding claims, **characterised in that** as common stroke drive (13, 18) a stroke drive (13, 18) of the tool holder (12, 16) and/or as common rotary drive (13, 18) a rotary drive (13, 18) of the tool holder (12, 16) and/or as common movement device a movement device of the tool holder or a coordinate guide (7) for the workpiece is provided.

5. A machine according to any one of the preceding claims, **characterised in that** the milling rotary drive (13, 18), optionally the common rotary drive (13, 18), comprises a gear mechanism, which is provided between a drive motor of the milling rotary drive or the common rotary drive (13, 18) and the thread-milling tool (20).

6. A machine according to any one of the preceding claims, **characterised in that** a second processing device is provided, which lies opposite the processing device that can be fitted with the thread-milling tool (20) transverse to the workpiece main plane and at which either a second stamping tool (24, 26) or a workpiece support (22) can be interchangeably mounted, wherein the workpiece is supported on the workpiece support (22) transverse to the workpiece main plane whilst said workpiece is being processed by means of the thread-milling tool (20) mounted interchangeably at the opposing processing device.

7. A machine according to any one of the preceding claims, **characterised in that** the second processing device comprises a second tool holder (12, 16), which lies opposite the tool holder (12, 16) that can be fitted with the thread-milling tool (20) transverse to the workpiece main plane and in which either a second stamping tool (24, 26) or a workpiece support (22) can be interchangeably mounted, wherein the workpiece is supported on the workpiece support (22) transverse to the workpiece main plane whilst said workpiece is being processed by means of the thread-milling tool (20) mounted interchangeably in the opposing tool holder (12, 16).

8. A machine according to any one of the preceding claims, **characterised in that** a retaining device (21, 22) is provided, which fixes the workpiece transverse to the workpiece main plane whilst said workpiece is being processed by means of the thread-milling tool (20) interchangeably mounted at the relevant processing device, optionally in the relevant tool holder (12, 16) and which at the same time allows the relative movement of the thread-milling tool (20) and the workpiece parallel to the workpiece main plane.

9. A machine according to any one of the preceding claims, **characterised in that** the retaining device (21, 22) comprises engagement elements (21, 22), which whilst said workpiece is being processed by means of the thread-milling tool (20) interchangeably mounted at the relevant processing device, optionally in the relevant tool holder (12, 16), rest against opposite faces of the workpiece transverse to the workpiece main plane, wherein the engagement elements (21, 22) arranged on both sides of the workpiece allow the relative movement of the thread-milling tool (20) and the workpiece parallel to the workpiece main plane.

10. A machine according to any one of the preceding claims, **characterised in that** at least the engagement element or elements (21, 22) on one side of the workpiece is or are movable by means of the milling stroke drive (13), optionally by means of the common stroke drive (13), into a non-functional position and into a functional position.

11. A machine according to any one of the preceding claims, **characterised in that** at least one engagement element (21, 22) rests against the workpiece with a rolling element (30, 34), which rolls on the workpiece during the relative movement of the thread-milling tool (20) and the workpiece parallel to the workpiece main plane.

12. A machine according to any one of the preceding claims, **characterised in that** the workpiece support (22) mounted interchangeably at the second processing device, optionally in the second tool holder (12, 16), forms an engagement element of the retaining device (21, 22).

13. A tool set for a machine (1) for processing workpiece, in particular metal sheets (2), having a stamping tool (24) that has a bearing device by means of which the stamping tool (24) is fixable at a processing device, optionally in a tool holder (12, 16), of the machine (1),
**characterised in that**
in addition to the stamping tool (24) a thread-milling tool (20) is provided for peripheral milling of threads, which comprises a bearing device (28), which is structurally identical with the bearing device of the stamping tool (24) and by means of which the thread-milling tool (20) is fixable in place of the stamping tool (24) at the same processing device as the stamping tool (24), optionally in the same tool holder (12, 16).

14. A tool set according to claim 13, **characterised in that** the thread-milling tool (20) forms a thread-milling tool arrangement jointly with a workpiece support (22) and **in that** a second stamping tool (26) is provided, wherein the workpiece support (22) of the thread-milling tool arrangement comprises a bearing device (32) by means of which the workpiece support (22) is fixable at a second processing device, optionally in a second tool holder (12, 16), of the machine (1) for processing workpieces, in particular metal sheets (2), and which is structurally identical with a bearing device of the second stamping tool (26), by means of which the second stamping tool (26) is fixable in place of the workpiece support (22) at the second processing device, optionally in the second tool holder (12, 16), of the machine (1) for processing workpieces, in particular metal sheets (2).

15. A tool set according to claim 14, **characterised in that** engagement elements (21, 22) are provided, which are associated with faces of the workpiece opposing each other transverse to the workpiece main plane, by means of which engagement elements the workpiece is fixed transverse to the workpiece main plane during the processing by the thread-milling tool (20) and which allow a relative movement of the thread-milling tool (20) and the workpiece parallel to the workpiece main plane.

16. A tool set according to claim 15, **characterised in that** at least one engagement element (21, 22) has on its face associated with the workpiece a rolling element (30, 34), with which the engagement element (21, 22) can be applied to the workpiece and which rolls on the workpiece during the relative movement of the thread-milling tool (20) and the workpiece parallel to the workpiece main plane.

17. A tool set according to any one of claims 14 to 16, **characterised in that** the workpiece support (22) forms an engagement element.

18. Use of a thread milling tool (20) for peripheral milling of threads at a processing device, optionally in a tool holder (12, 16), of a machine (1) for processing workpieces, in particular metal sheets (2), wherein the thread-milling tool (20) is fixed by means of a bearing device (28) that is structurally identical with a bearing device of a stamping tool (24) in place of the stamping tool (24) at the processing device, optionally in the tool holder (12, 16), of the machine (1).

## Revendications

1. Machine pour l'usinage de pièces du genre plaques, en particulier de tôles (2), avec un dispositif d'usinage sur lequel un outil de découpage (24, 26) peut être monté de manière interchangeable pour usiner une pièce,
- sachant qu'un outil de découpage (24, 26) monté de manière interchangeable sur le dispositif d'usinage et la pièce peuvent, au moyen d'un entraînement en translation de découpage (13, 18), être déplacés l'un par rapport à l'autre le long d'un axe de translation (14) s'étendant transversalement au plan principal de la pièce et peuvent, au moyen d'un entraînement en rotation de découpage (13, 18), être tournés l'un par rapport à l'autre autour d'un axe de rotation (15) s'étendant transversalement au plan principal de la pièce,
- et sachant que l'outil de découpage (24, 26) monté de manière interchangeable sur le dispositif d'usinage et la pièce peuvent, au moyen d'un dispositif de déplacement de découpage, être déplacés l'un par rapport à l'autre parallèlement au plan principal de la pièce,
**caractérisée**
- **en ce qu'**un outil à fraiser les filets (20) peut être monté de manière interchangeable sur le dispositif d'usinage à la place de l'outil de découpage (24, 26),
- **en ce que** l'outil à fraiser les filets (20) monté de manière interchangeable sur le dispositif d'usinage et la pièce peuvent, au moyen d'un entraînement en translation de fraisage (13, 18), être déplacés l'un par rapport à l'autre le long d'un axe de translation (14) s'étendant transversalement au plan principal de la pièce et peuvent, au moyen d'un entraînement en rotation de fraisage (13, 18), être tournés l'un par rapport à l'autre autour d'un axe de rotation (15) s'étendant transversalement au plan principal de la pièce,
- **en ce que** l'outil à fraiser les filets (20) monté de manière interchangeable sur le dispositif d'usinage et la pièce peuvent, au moyen d'un dispositif de déplacement de fraisage, être déplacés l'un par rapport à l'autre parallèlement au plan principal de la pièce,
- et **en ce que** le mouvement relatif de l'outil à fraiser les filets (20) et de la pièce le long de l'axe de translation (14) et le mouvement relatif de l'outil à fraiser les filets (20) et de la pièce parallèlement au plan principal de la pièce peuvent être commandés d'une manière coordonnée de telle sorte que, avec un mouvement simultané de rotation relative de l'outil à fraiser les filets (20) et de la pièce autour de l'axe de rotation (15), un filetage peut être fraisé sur la pièce.

2. Machine selon la revendication 1, **caractérisée en ce que** le dispositif d'usinage présente un porte-outil (12, 16) qui, lors de l'usinage de la pièce, fait face à la pièce transversalement au plan principal de la pièce, et dans lequel un outil de découpage (24, 26) ou, à la place de l'outil de découpage (24, 26), un outil à fraiser les filets (20) peut être monté de manière interchangeable, sachant qu'un outil à fraiser les filets (20) monté de manière interchangeable dans le porte-outil (12, 16) et la pièce peuvent, au moyen de l'entraînement en translation de fraisage (13, 18), être déplacés l'un par rapport à l'autre le long de l'axe de translation (14) s'étendant transversalement au plan principal de la pièce et peuvent, au moyen de l'entraînement en rotation de fraisage (13, 18), être tournés l'un par rapport à l'autre autour de l'axe de rotation (15) s'étendant transversalement au plan principal de la pièce, et sachant que l'outil à fraiser les filets (20) monté de manière interchangeable dans le porte-outil (12, 16) et la pièce peuvent, au moyen du dispositif de déplacement de fraisage, être déplacés l'un par rapport à l'autre parallèlement au plan principal de la pièce.

3. Machine selon l'une des revendications précédentes, **caractérisée en ce qu'**un entraînement en translation commun (13, 18) est prévu comme entraînement en translation de découpage (13, 18) ainsi que comme entraînement en translation de fraisage (13, 18), et/ou un entraînement en rotation commun (13, 18) est prévu comme entraînement en rotation de découpage (13, 18) ainsi que comme entraînement en rotation de fraisage (13, 18), et/ou un dispositif de déplacement commun est prévu comme dispositif de déplacement de découpage ainsi que comme dispositif de déplacement de fraisage.

4. Machine selon l'une des revendications précédentes, **caractérisée en ce qu'**un entraînement en translation (13, 18) du porte-outil (12, 16) est prévu comme entraînement en translation commun (13, 18), et/ou un entraînement en rotation (13, 18) du porte-outil (12, 16) est prévu comme entraînement en rotation commun (13, 18), et/ou un dispositif de déplacement du porte-outil ou un guidage par coordonnées cartésiennes (7) pour la pièce est prévu comme dispositif de déplacement commun.

5. Machine selon l'une des revendications précédentes, **caractérisée en ce que** l'entraînement en rotation de fraisage (13, 18), le cas échéant l'entraînement en rotation commun (13, 18), présente une transmission qui est prévue entre un moteur d'entraînement de l'entraînement en rotation de fraisage ou selon le cas de l'entraînement en rotation commun (13, 18) et l'outil à fraiser les filets (20).

6. Machine selon l'une des revendications précédentes, **caractérisée en ce qu'**il est prévu un deuxième dispositif d'usinage, qui fait face transversalement au plan principal de la pièce au dispositif d'usinage pouvant être équipé de l'outil à fraiser les filets (20) et sur lequel peut être monté de manière interchangeable et sélective un deuxième outil de découpage (24, 26) ou un support de pièce (22), sachant que la pièce est soutenue transversalement au plan principal de la pièce sur le support de pièce (22) lorsqu'elle est usinée au moyen de l'outil à fraiser les filets (20) monté de manière interchangeable sur le dispositif d'usinage opposé.

7. Machine selon l'une des revendications précédentes, **caractérisée en ce que** le deuxième dispositif d'usinage présente un deuxième porte-outil (12, 16), qui fait face transversalement au plan principal de la pièce au porte-outil (12, 16) pouvant être équipé de l'outil à fraiser les filets (20) et dans lequel peut être monté de manière interchangeable et sélective un deuxième outil de découpage (24, 26) ou un support de pièce (22), sachant que la pièce est soutenue transversalement au plan principal de la pièce sur le support de pièce (22) lorsqu'elle est usinée au moyen de l'outil à fraiser les filets (20) monté de manière interchangeable dans le porte-outil opposé (12, 16).

8. Machine selon l'une des revendications précédentes, **caractérisée en ce qu'**il est prévu un dispositif de maintien (21, 22) qui immobilise la pièce transversalement au plan principal de la pièce lorsqu'elle est usinée au moyen de l'outil à fraiser les filets (20) monté de manière interchangeable sur le dispositif d'usinage correspondant, le cas échéant dans le porte-outil correspondant(12, 16), et qui autorise en même temps le mouvement relatif de l'outil à fraiser les filets (20) et de la pièce parallèlement au plan principal de la pièce.

9. Machine selon l'une des revendications précédentes, **caractérisée en ce que** le dispositif de maintien (21, 22) comprend des éléments d'application (21, 22) qui, lors de l'usinage de la pièce au moyen de l'outil à fraiser les filets (20) monté de manière interchangeable sur le dispositif d'usinage correspondant, le cas échéant dans le porte-outil correspondant(12, 16), s'appliquent contre des côtés de la pièce mutuellement opposés transversalement au plan principal de la pièce, sachant que les éléments d'application (21, 22) disposés des deux côtés de la pièce autorisent le mouvement relatif de l'outil à fraiser les filets (20) et de la pièce parallèlement au plan principal de la pièce.

10. Machine selon l'une des revendications précédentes, **caractérisée en ce qu'**au moins le ou les éléments d'application (21, 22) sur un côté de la pièce peuvent être déplacés dans une position de non-fonctionnement ainsi que dans une position de fonctionnement au moyen de l'entraînement en translation de fraisage (13), le cas échéant au moyen de l'entraînement en translation commun (13).

11. Machine selon l'une des revendications précédentes, **caractérisée en ce qu'**au moins un élément d'application (21, 22) s'applique contre la pièce par un élément roulant (30, 34) qui roule sur la pièce lors du mouvement relatif de l'outil à fraiser les filets (20) et de la pièce parallèlement au plan principal de la pièce.

12. Machine selon l'une des revendications précédentes, **caractérisée en ce que** le support de pièce (22) monté de manière interchangeable sur le deuxième dispositif d'usinage, le cas échéant dans le deuxième porte-outil (12, 16), forme un élément d'application du dispositif de maintien (21, 22).

13. Assortiment d'outils pour une machine (1) pour l'usinage de pièces du genre plaques, en particulier de tôles (2), avec un outil de découpage (24) qui présente un dispositif formant palier au moyen duquel l'outil de découpage (24) peut être fixé en position sur un dispositif d'usinage, le cas échéant dans un porte-outil (12, 16), de la machine (1),
**caractérisé en ce qu'**en plus de l'outil de découpage (24), il est prévu un outil à fraiser les filets (20) pour le fraisage tangentiel de filets, qui présente un dispositif formant palier (28) qui est de construction identique au dispositif formant palier de l'outil de découpage (24) et au moyen duquel l'outil à fraiser les filets (20) peut, comme l'outil de découpage (24), être fixé en position à la place de l'outil de découpage (24) sur le même dispositif d'usinage, le cas échéant dans le même porte-outil (12, 16).

14. Assortiment d'outils selon la revendication 13, **caractérisé en ce que** l'outil à fraiser les filets (20) forme conjointement avec un support de pièce (22) un ensemble d'outil à fraiser les filets et **en ce qu'**il est prévu un deuxième outil de découpage (26), sachant que le support de pièce (22) de l'ensemble d'outil à fraiser les filets présente un dispositif formant palier (32) au moyen duquel le support de pièce (22) peut être fixé en position sur un deuxième dispositif d'usinage, le cas échéant dans un deuxième porte-outil (12, 16), de la machine (1) pour l'usinage de pièces, en particulier de tôles (2), et qui est de construction identique à un dispositif formant palier du deuxième outil de découpage (26), au moyen duquel le deuxième outil de découpage (26) peut être fixé en position à la place du support de pièce (22) sur le deuxième dispositif d'usinage, le cas échéant dans le deuxième porte-outil (12, 16), de la machine (1) pour l'usinage de pièces, en particulier de tôles (2).

15. Assortiment d'outils selon la revendication 14, **caractérisé en ce qu'**il est prévu des éléments d'application (21, 22), qui sont associés à des côtés de la pièce mutuellement opposés transversalement au plan principal de la pièce, au moyen desquels la pièce est immobilisée transversalement au plan principal de la pièce pendant l'usinage par l'outil à fraiser les filets (20), et qui autorisent un mouvement relatif de l'outil à fraiser les filets (20) et de la pièce parallèlement au plan principal de la pièce.

16. Assortiment d'outils selon la revendication 15, **caractérisé en ce qu'**au moins un élément d'application (21, 22) présente sur son côté associé à la pièce un élément roulant (30, 34), par lequel l'élément d'application (21, 22) peut être appliqué contre la pièce et qui roule sur la pièce lors du mouvement relatif de l'outil à fraiser les filets (20) et de la pièce parallèlement au plan principal de la pièce.

17. Assortiment d'outils selon l'une des revendications 14 à 16, **caractérisé en ce que** le support de pièce (22) forme un élément d'application.

18. Utilisation d'un outil à fraiser les filets (20) pour le fraisage tangentiel de filets sur un dispositif d'usinage, le cas échéant dans un porte-outil (12, 16), d'une machine (1) pour l'usinage de pièces, en particulier de tôles (2), sachant que l'outil à fraiser les filets (20) est, au moyen d'un dispositif formant palier (28) qui est de construction identique à un dispositif formant palier d'un outil de découpage (24), fixé en position à la place de l'outil de découpage (24) sur le dispositif d'usinage, le cas échéant dans le porte-outil (12, 16), de la machine (1).
